# EUROPEAN PATENT SPECIFICATION

(11) **EP 3 712 445 B1**
(45) Date of publication and mention of the grant of the patent: **22.03.2023**
(21) Application number: 20172199.0
(22) Date of filing: 23.03.2017
(51) Int. Cl.: F16B 5/08, B23K 9/02, B23K 26/323, F16B 5/04

(54) **JOINT STRUCTURE**
VERBINDUNGSSTRUKTUR
STRUCTURE DE JOINT

(30) Priority: 30.03.2016 JP 2016067195
(43) Date of publication of application: 23.09.2020
(62) Divisional of application: 17774647.6
(73) Proprietor: Panasonic Intellectual Property Management Co., Ltd., Osaka-shi, Osaka 540-6207 (JP)
(72) Inventor: FUJIWARA, Junji, Osaka, 540-6207 (JP); KAWAMOTO, Atsuhiro, Osaka, 540-6207 (JP)
(74) Representative: Roux, Stéphane

(56) References cited:
- CN-A- 105 397 293
- DE-A1-102011 085 303
- US-A1- 2009 278 371

## Description

### TECHNICAL FIELD

The present disclosure relates to a joint structure including similar types of metallic materials and at least one different type of material sandwiched between the metallic materials. The joint structure is produced using laser, arc, or plasma as a heat source.

### BACKGROUND ART

The recent globalization of the production of automobiles and other transportation vehicles has created a growing demand for reducing the total cost for each vehicle, in particular, for improving throughput by reducing production time.

Furthermore, there is a global demand for reducing CO₂ emissions to prevent global warming, and this demand has been answered by the transportation vehicle industry, which is making increasing efforts to improve fuel efficiency. One of the efforts is to reduce the vehicle weights by, for example, increasing the proportion of light-weight materials in the vehicles.

With such a background, spot welding is popular in this industry. However, this welding is a kind of resistance welding, in which materials to be welded are pressurized by upper and lower electrodes used as a spot welding gun until there is no gap left between the materials, and then the electrodes are energized. For this reason, spot welding is not suitable for one side welding. Spot welding also imposes limitations on the product shape because the part to be welded has to be sandwiched from above and below by the gun. Another disadvantage of the welding is that pressurizing the part to be welded needs a space into which the gun enters above and below the materials to be welded. Still another disadvantage is that beside welding time, spot welding takes additional time, such as the time to carry the heavy gun, the time to pressurize the materials after the gun reaches the part to be welded, and the time to cool the welded part.

Meanwhile, the industry is trying to reduce the weight of automobile materials by changing some of the materials from steel to light metal such as aluminum. This trend has created a growing demand for techniques and structures that allow the joining of light metal and steel.

Examples of conventional tools for joining different types of materials together include rivets for spot welding, and adhesives. Patent Literature 1 discloses the following techniques: a pressurization method in which a rivet and a material of the same type as the rivet sandwich a different type of material and pressurize it; a rivet having a shape capable of absorbing the plastic flow of the different type of material caused by welding heat input; and methods of crimping and spot welding capable of the absorption. This configuration ensures the space into which deformed part of the different type of material is moved during the crimping and spot welding. The configuration also prevents depression of the different type of material due, for example, to misalignment of the electrodes during spot welding, thereby maintaining the joint strength.

Finally, Patent Literature 2 discloses a welding structure of Nitinol and different metal materials and welding method thereof.

### Citation List

### Patent Literature

PTL 1: Japanese Unexamined Patent Application Publication No.2015-42417
PTL 2: Chinese Patent Application Publication No. 105 397 293

### SUMMARY

The joint structure according to the present invention is defined by the appended claims. According to the present disclosure, it includes a first metallic material having a first projection; a second metallic material similar in type to the first metallic material and weldable to the first metallic material, the second metallic material having a first penetrating part larger in diameter or width than the first projection, the first projection being positioned in the first penetrating part; and a different type of material different in type from the first metallic material and the second metallic material and difficult to be welded to the first metallic material and the second metallic material, the different type of material having a second penetrating part larger in diameter or width than the first projection, the rim of the second penetrating part being spaced radially or widthwise from the first projection by a first gap. The first projection is positioned in the second penetrating part with the first gap between the first projection and the second penetrating part, the size of the first gap being varied depending on the type of the different type of material. The first projection is further positioned in the first penetrating part. Hence, the different type of material is sandwiched between the first metallic material and the second metallic material. The outer edge of the first projection of the first metallic material is welded to the inner edge of the first penetrating part so that the first metallic material and the second metallic material are melted and joined together to compress and fix the different type of material between the first metallic material and the second metallic material, thereby fixing the first metallic material, the second metallic material, and the different type of material together.

### BRIEF DESCRIPTION OF DRAWINGS

FIG. 1 is a schematic diagram of a joint structure during laser welding according to a first exemplary embodiment of the present disclosure.
FIG. 2 is a schematic diagram of another joint structure during laser welding according to the first exemplary embodiment of the present disclosure.
FIG. 3 is a schematic diagram of another joint structure during laser welding according to the first exemplary embodiment of the present disclosure.
FIG. 4 is a schematic diagram of another joint structure during laser welding according to the first exemplary embodiment of the present disclosure.
FIG. 5 is a graph showing the measurement results of the relationship between the type of second material 2 and the size of first gap 6 according to the first exemplary embodiment of the present disclosure.
FIG. 6 is a perspective view of a joint structure during laser welding according to the first exemplary embodiment of the present disclosure.
FIG. 7 is a perspective view of another joint structure during laser welding according to the first exemplary embodiment of the present disclosure.
FIG. 8 is a perspective view of another joint structure during laser welding according to the first exemplary embodiment of the present disclosure.
FIG. 9 is a schematic diagram of a joint structure during arc welding according to the first exemplary embodiment of the present disclosure.
FIG. 10 is a schematic diagram of a joint structure during laser welding according to a second exemplary embodiment of the present disclosure.
FIG. 11 is a schematic diagram of a joint structure during laser welding according to a third exemplary embodiment of the present disclosure.
FIG. 12 is a schematic diagram of another joint structure during laser welding according to the third exemplary embodiment of the present disclosure.
FIG. 13 is a schematic diagram of joining different types of materials together in a conventional manner.

### DESCRIPTION OF EMBODIMENTS

### The Reason for which the Present Disclosure has been Made

Prior to describing the exemplary embodiments of the present disclosure, the reason for which the present disclosure has been made will now be described.

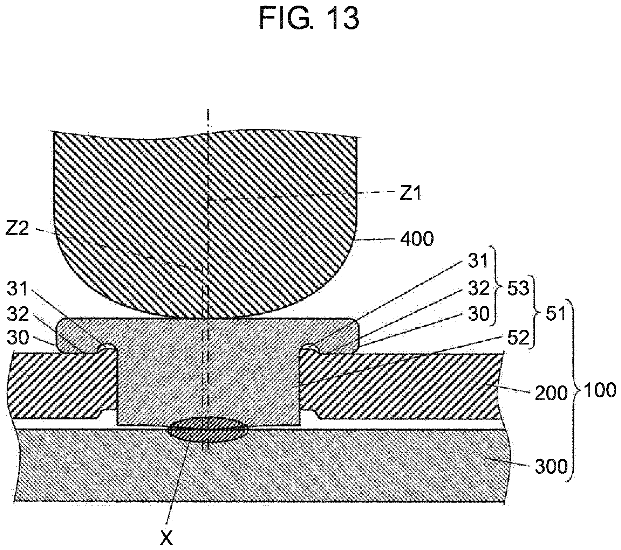

Conventional joint members including a material that is different in type from the other materials will now be described with reference to FIG. 13. Crimping and spot welding use a space to accommodate the deformed part of a different type of material 200. In addition, electrode 400 is to be prevented from being misaligned during spot welding so as to prevent depression of material 200, thereby maintaining the joint strength between the joint members. These conditions can be satisfied by using rivets with a complicated shape, such as radius (R)-chamfered part 30 or annular groove 31. Rivet 51 with such a complicated shape can be fabricated by high precision processing technology, thus increasing the production cost. Furthermore, spot welding, which is a kind of resistance welding, involves time-consuming processes, such as pressurization, energization, cooling, and transfer. Moreover, during spot welding, a set of joint members 100 is sandwiched by an unillustrated spot welding gun from both sides, which indicates a low degree of design freedom.

Adjacent rivets too close to each other can cause current diversion during spot welding. This would result in insufficient formation of a nugget, which is a part welded and solidified in the resistance welding. A desired nugget without current diversion can be formed by setting the pitch between adjacent rivets at not less than the minimum pitch. Therefore, rivets cannot be arranged at a pitch not more than the minimum pitch, making it impossible to improve joint stiffness at required positions.

The present disclosure provides a simple joint structure that can join different types of materials together by laser, arc, or plasma welding so as to improve the throughput.

### FIRST EXEMPLARY EMBODIMENT

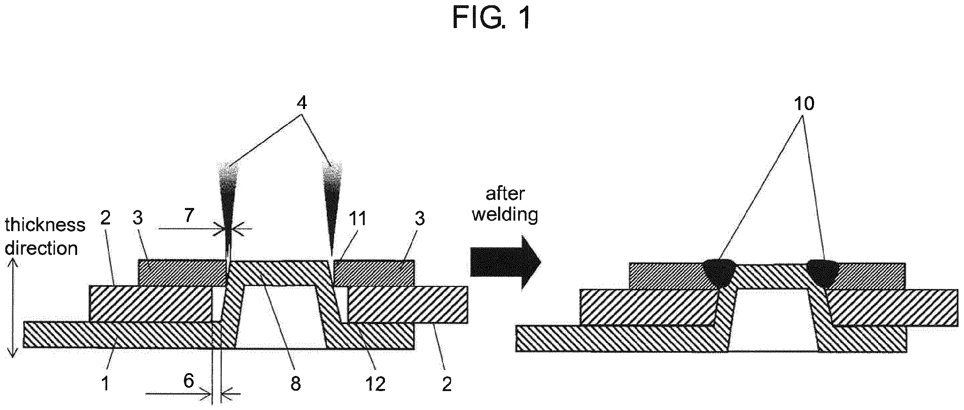

An exemplary embodiment not forming part of the claimed invention will be described with reference to FIGS. 1 to 9.

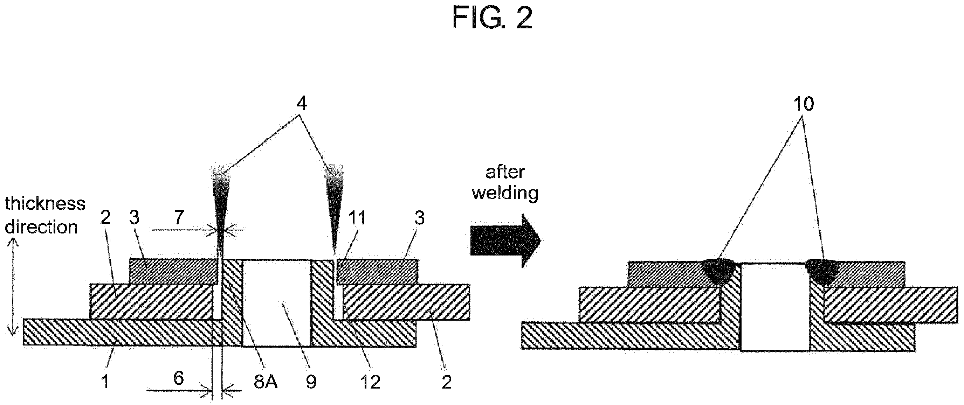

FIGS. 1 and 2 show a joint structure composed of the following joint members: first material 1, which is the first metallic material of the present disclosure; third material 3, which is the second metallic material of the present disclosure, and which is similar in type to first material 1; and second material 2, which is different in type from first and third materials 1 and 3.

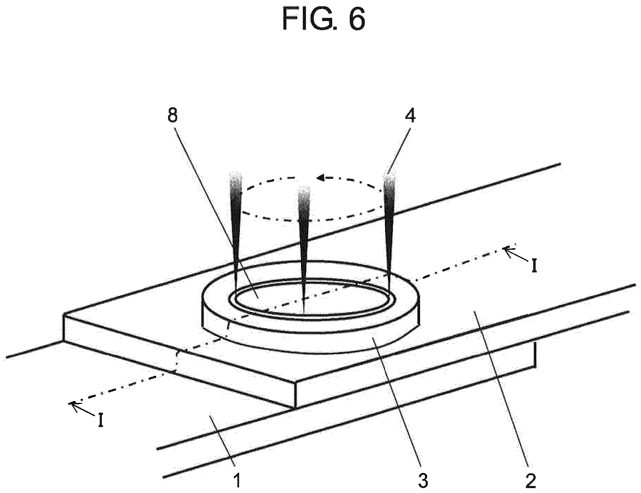

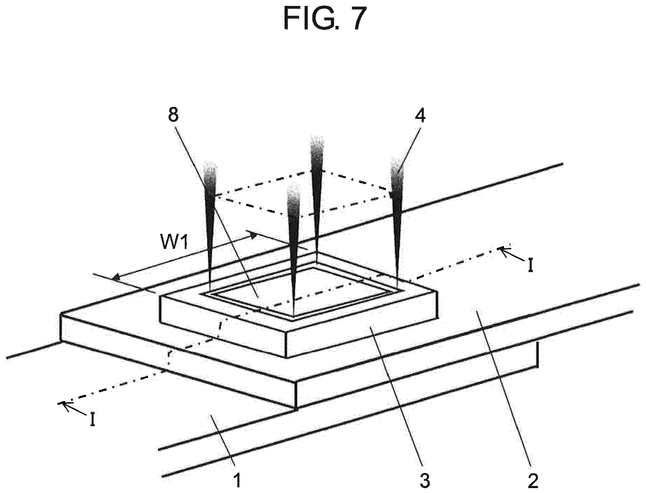

FIG. 6 is a schematic diagram in which the upper plate is circular-shaped third material 3. FIG. 7 is a schematic diagram in which the upper plate is rectangular-shaped third material 1. The lines I-I shown in FIGS. 6 and 7 correspond to the cross sectional view of FIGS. 1 and 2.

In FIG. 1, first material 1 and third material 3 both made of metal are joined together with second material 2 as a different type of material. First material 1 has first projection 8. First material 1 and third material 3 sandwich second material 2 in between in such a manner that first projection 8 of first material 1 is positioned in first through-hole 11 of third material 3 and second through-hole 12 of second material 2. First through-hole 11 is an example of the first penetrating part of the present disclosure, and second through-hole 12 is an example of the second penetrating part of the present disclosure.

First projection 8 of first material 1 is positioned in second through-hole 12 of second material 2 and first through-hole 11 of third material 3. This arrangement prevents misalignment of first and third materials 1 and 3 with respect to first and second through-holes 11 and 12. It therefore becomes possible to visually check the mark of laser radiation position and the appropriateness of the position of the bead.

The first penetrating part is first through-hole 11, and the second penetrating part is second through-hole 12; alternatively, however, these parts may be, for example, penetrating grooves.

The similar types of metallic materials are defined as metallic materials weldable to each other. They can not only be identical materials, but also be materials weldable to each other, such as ferrous metals and nonferrous metals. To be more specific, materials 1 and 3 can be a combination of ferrous metals, such as two types of mild steel; mild steel and stainless steel; two types of stainless steel; mild steel and high-tensile steel; high-tensile steel and stainless steel; and two types of high-tensile steel. Materials 1 and 3 can also be a combination of nonferrous metals, such as two types of aluminum; aluminum and an aluminum alloy; and two types of aluminum alloys.

Second material 2 is defined as a material different from and difficult to be welded to first material 1 and third material 3, which are of similar types. For example, when first material 1 and third material 3 are ferrous metals, second material 2 is nonferrous metal, such as copper or aluminum. As another example, when first material 1 and third material 3 are metals, second material 2 is resin, such as carbon fiber reinforced plastic (CFRP) or polyethylene terephthalate (PET).

The weld is where first projection 8 of first material 1 and first through-hole 11 of third material 3 are butted against each other. When first projection 8 of first material 1 is positioned in second through-hole 12 of second material 2, the clearance between first projection 8 and the rim of second through-hole 12 is referred to as first gap 6. The clearance between the outer edge of first projection 8 and the rim of first through-hole 11 is referred to as second gap 7. Second gap 7 is basically small enough to allow first projection 8 to be positioned in first through-hole 11, which are similar types of metallic materials. However, second gap 7 can have a tolerance of up to 25% of the thickness of these similar types of materials. As shown in FIG. 6, welding is performed by applying laser 4, from above in the thickness direction, along the circular portion where the outer edge of first projection 8 of first material 1 is in contact with first through-hole 11 of third material 3. The resulting bead is weld 10 as shown in FIG. 1.

The term "thickness direction" is defined as the direction perpendicular to the main surfaces of first, second, and third materials 1, 2, and 3 before welding, and is shown by the arrows in FIG. 1.

Next, second gap 7 between the similar types of metallic materials sandwiching the different type of material in between during and after welding will now be described with reference to FIG. 1. Butt welding is performed by applying laser 4 along the circular portion where the outer edge of first projection 8 is butted against the inner edge of first through-hole 11 when first projection 8 is positioned in first through-hole 11. In the welding, first material 1 and third material 3 are melted and joined together, and weld 10 as molten metal is solidified and shrunk. This reduces second gap 7 between first projection 8 and the rim of first through-hole 11, thereby fixing first material 1 and third material 3 to each other. To achieve a weld with no holes, the size of second gap 7 is up to 25% of either the thickness of the metallic material to which laser is applied or the thickness of the thinner of the first and third materials 1 and 3. The estimate of up to 25% is calculated from experimental data.

In this example, first material 1 and third material 3 are both mild steel, and second material 2, which is PET as a resin material, is sandwiched between materials 1 and 3. Laser is applied from above to these stacked materials at an output of 3 kW so as to weld the circular region where the outer edge of first projection 8 is positioned in first through-hole 11 of third material 3. The circular region, which is a weld seam, has a diameter of, for example, ϕ10 mm.

The following is a description of how the tolerance of second gap 7 between the metallic materials to be positioned to each other changes depending on the thickness of the metallic materials. For example, when first material 1 and third material 3 have a thickness t of 0.8 mm, second gap 7 can be up to 0.2 mm to achieve welding without holes. If second gap 7 exceeds 0.3 mm, the weld seam has holes, demonstrating a defective weld. When the thickness t is 2.3 mm, second gap 7 can be up to 0.5 to 0.6 mm to achieve welding without holes. If second gap 7 exceeds 0.7 mm, the weld seam has holes, demonstrating a defective weld.

This indicates that when first material 1 and third material 3 have the same thickness, a weld with no holes can be achieved even if molten metal corresponding to up to 25% of this thickness falls into first gap 6. Meanwhile, when first material 1 and third material 3 are different in thickness, a weld with no holes can be achieved even if molten metal corresponding to up to 25% of the thinner of first and third materials 1 and 3 falls into first gap 6. Second gap 7 exceeding 25% of the thinner of first and third materials 1 and 3 would be too large to be filled with the molten metal, thereby causing welding holes.

Next, first gap 6 during and after welding will be described with reference to FIG. 1. As described above, first gap 6 is the clearance between first projection 8 of first material 1 and the rim of second through-hole 12 of second material 2. Laser 4 is applied along the circular weld seam where the outer edge of first projection 8 of first material 1 is positioned in first through-hole 11 of third material 3. In the welding, first material 1 and third material 3 are melted and joined together, allowing weld 10 as molten metal to be solidified and shrunk. This reduces and fixes second gap 7, allowing second material 2 to be fixedly sandwiched between first and third materials 1 and 3. Thus, the clearance between projection 8 (having no through-hole) of first material 1 and the rim of second through-hole 12 of second material 2 is defined as first gap 6.

Laser 4 is applied in the thickness direction to the region where first projection 8 of first material 1 is positioned in first through-hole 11 of third material 3. As a result, second material 2 is softened and melted by the welding heat input indirectly transferred from weld 10 where first projection 8 and first through-hole 11 are melted and joined together. In other words, the welding heat input to first material 1 as the first metallic material indirectly heats part of the second material that is around second through-hole 12 until the part is softened and melted. A key to successful softening and melting of second material 2 is the size of first gap 6 between first projection 8 of first material 1 and the rim of second through-hole 12 of second material 2.

When first gap 6 is in a proper range, second material 2 is partly melted by the welding heat input while first material 1 and third material 3 are being welded. The molten part of second material 2 flows into first gap 6. As a result, first material 1 and third material 3 are tightly fixed to the inner surface of second through-hole 12 of second material 2.

When first gap 6 is small, first projection 8 and part of third material 3 that is around first through-hole 11 are welded together. During the welding, second material 2 is partly melted by the welding heat input while laser 4 is being applied to the weld seam where first material 1 and third material 3 are in contact with each other. The molten part of second material 2 flows into first gap 6. Assume that second material 2 is resin or other low-boiling-point materials and that first gap 6 is so small that first projection 8 and the rim of second through-hole 12 are too close to each other. In this case, the resin of second material 2 is excessively subjected indirectly to the welding heat input while laser 4 is being applied to first and third materials 1 and 3. As a result, the resin of second material 2 may vaporize and blow off, causing the weld to be defective. Thus, the welding results of the part of second material 2 that is around second through-hole 12 depend on the size of first gap 6 under the influence of the welding heat input to first material 1 and third material 3.

The allowable size of first gap 6, which depends on the type of second material 2, has been determined from experimental data.

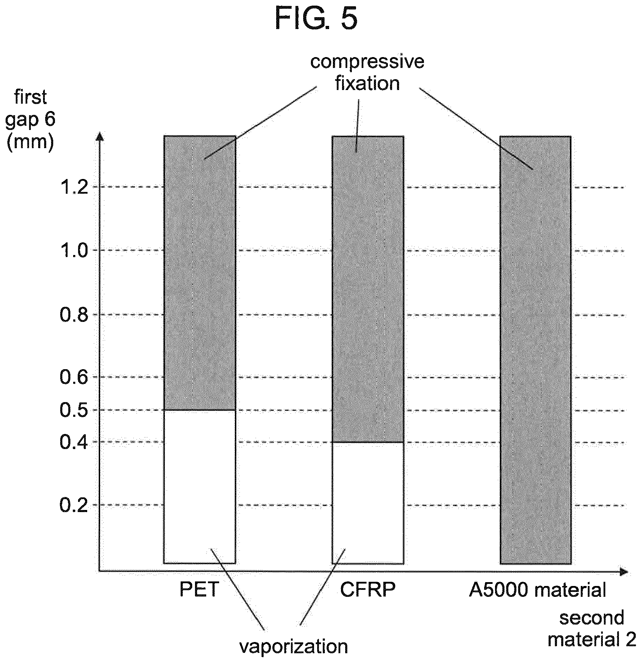

An example of the data is shown in FIG. 5.

FIG. 5 is a graph showing the measurement results of the relationship between the type of second material 2 and the size of first gap 6.

FIG. 5 shows the experimental data obtained when the type of second material 2 are the following: PET and CFRP, which are resin materials; and an A5000 series aluminum alloy, which is nonferrous metal.

In this example, first material 1 and third material 3 are mild steel with a thickness t of 1.6 mm. Second material 2, which is one of PET, CFRP, and the A5000 series aluminum alloy, has a thickness t of 2.0 mm. Second material 2 is sandwiched between materials 1 and 3, and laser is applied at an output of 3 kW from above in the thickness direction to produce a circular weld seam on the region where first projection 8 is in contact with first through-hole 11. In FIG. 5, the proper range of first gap 6 is determined according to the type of second material 2 when laser 4 is applied in the thickness direction to produce a circular weld seam. The weld seam, which corresponds to the region where the outer edge of first projection 8 and first through-hole 11 are in contact with each other, has a diameter of ϕ10 mm.

When second material 2 is PET, then first gap 6 can be at least 0.5 mm, or in other words, at least 25% of the thickness of second material 2 to achieve welding with no holes or no vaporization of the PET. If first gap 6 is less than 0.5 mm, or in other words, less than 25% of the thickness of second material 2, then the weld seam may have holes or other defectiveness due to the melting or vaporization of the PET.

When second material 2 is CFRP, first gap 6 can be at least 0.4 mm or in other words, at least 20% of the thickness of second material 2 to achieve welding with no holes or no vaporization of the CFRP. If first gap 6 is less than 0.4 mm, or in other words, less than 20% of the thickness of second material 2, then the weld seam may have holes or other defectiveness due to the melting or vaporization of the CFRP.

First gap 6 has only to be larger than, for example, 0 mm, or in other words, large enough to accept first projection 8 in second through-hole 12.

When second material 2 is an A5000 series aluminum alloy, welding can be achieved with no holes or no vaporization of the aluminum alloy as long as first gap 6 is large enough to fit first projection 8 in second through-hole 12.

The above-described experimental data shows the difference depending on the type of second material 2. When second material 2 is a resin material, it has tendencies similar to the PET. Among resin materials, fiber reinforced resins have tendencies similar to those of CFRP.

As described above, the properties such as the melting and boiling points of the resin material of second material 2 influence the allowable size of first gap 6 during welding.

Assume that first gap 6 is at least 2.0 mm when second material 2 is resin, or is at least 1.5 mm when second material 2 is CFRP. Thus, when first gap 6 is too large, the part of second material 2 that is around second through-hole 12 is unlikely to receive the welding heat input of weld 10 and is unlikely to melt. This would make it difficult for second material 2 to flow and to be tightly fixed around first projection 8 of first material 1. This causes second material 2 sandwiched between first and third materials 1 and 3 to be fixed in the thickness direction alone.

Other nonferrous metals have similar tendencies to the A5000 series aluminum alloy, and it never occurs that second material 2 is melted and vaporized due to the heat.

The positioning of second through-hole 12 and first through-hole 11 with respect to first projection 8 which is positioned in these holes 12 and 11 can be achieved by using an unillustrated clamping tool, a positioning pin, or a robot arm for supporting and positioning.

The present exemplary embodiment has described the case that first material 1 has first projection 8. Alternatively, however, as shown in FIG. 2, first material 1 may have first projection 8A having, at its end, third through-hole 9 as a third penetrating part. In this case, first projection 8A is positioned in second through-hole 12 of second material 2 and first through-hole 11 of third material 3 in this order in such a manner that second material 2 is sandwiched between first material 1 and third material 3.

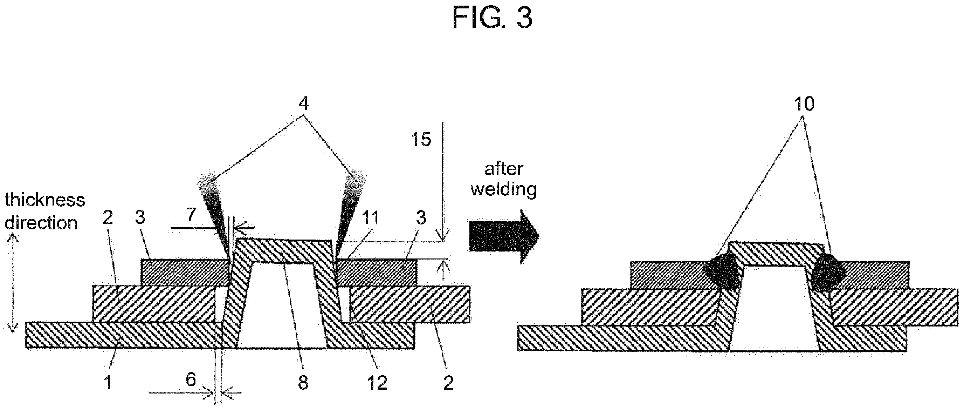

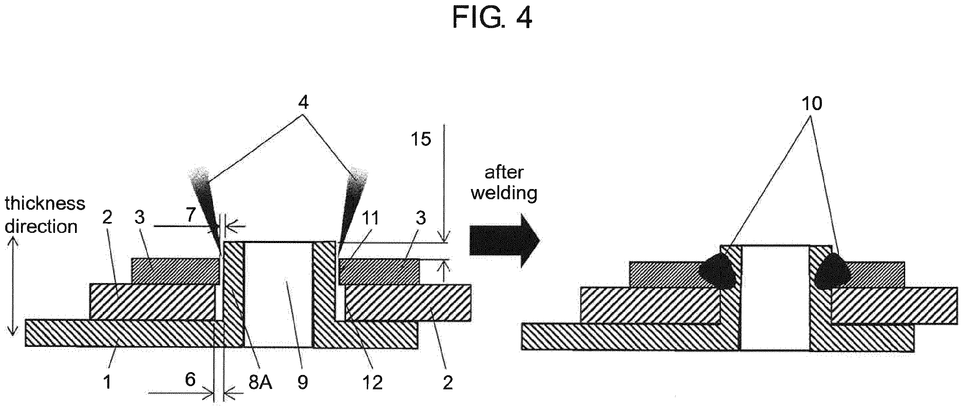

The end of first projection (8, 8A) of first material 1 is flush with the upper end of first through-hole 11 of third material 3 in FIGS. 1 and 2, but may alternatively extend further than the upper end of first through-hole 11 as shown in FIGS. 3 and 4. The latter configuration improves heat dissipation and heat capacity during welding. Furthermore, inclining the radiation angle of laser 4 can mitigate the heat transfer to second material 2 during welding. This relatively reduces the allowable size of the first gap 6, thereby increasing the welding tolerance. To be more specific, the end of first projection 8 of first material 1 extends further than the upper end of first through-hole 11 of third material 3 by at least 3 to 5 mm in length 15. This increases the heat capacity to the extended end of first projection 8, and hence, the heat dissipation during welding. Furthermore, the radiation angle of laser 4 can be easily inclined toward first projection 8, thereby mitigating the welding heat input to the second material. This holds true not only when first projection 8 does not have a through-hole at its end as shown in FIG. 3 but also when first projection 8A has, at its end, third through-hole 9 as the third penetrating part as shown in FIG. 4. Thus, first to third materials 1 to 3 are stacked in such a manner that the outer edge of first projection 8A is positioned in first through-hole 11 and second through-hole 12. As a result, second material 2 can be sandwiched between first material 1 and third material 3.

FIG. 6 shows laser 4 applied in a circular shape, and FIG. 7 shows laser 4 applied in a shape other than a circle. In the joint structure composed of first material 1, third material 3, and second material 2 shown in FIG. 7, the upper plate in the thickness direction is rectangular-shaped third material 3. Assume that the joint strength required for weld 10 is directional, or in other word, a joining strength distribution is required. In this case, the region where the projection of first material 1 is in contact with third material 3 is formed in the direction in which a high joining strength is required. For example, when the joint structure is rectangular, the longitudinal side (W1) of the rectangle is arranged in the direction in which the high joint strength is required. This requires a smaller area than in the case that first projection 8 is large square-shaped.

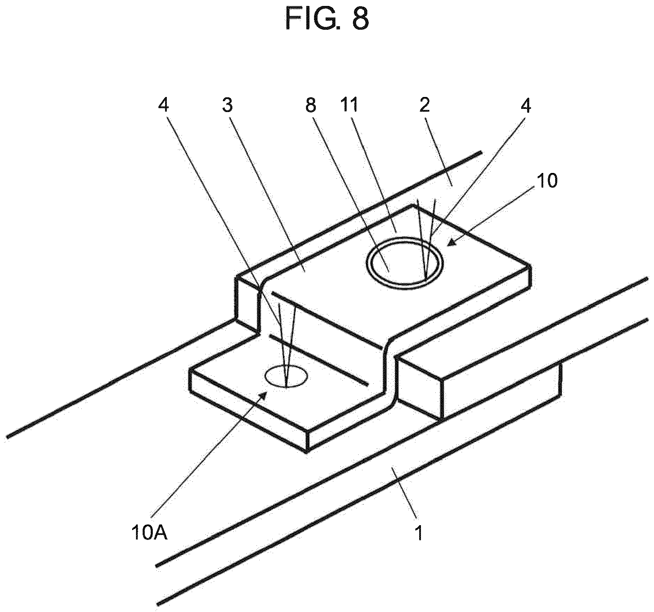

FIG. 8 shows an example of increasing the joining strength and simplifying positioning.

In FIG. 8, in order to improve tensile strength during welding, second material 2 is sandwiched between first material 1 and third material 3, which is folded to have a stepped portion. In this example, first material 1 is joined with third material 3 via second material 2 at weld 10 where first projection 8 is positioned in first through-hole 11, and first material 1 is further joined directly to third material 3 at weld 10A. In this case, the tensile stress is dispersed between weld 10 and weld 16A so as to prevent stress concentration on weld 10, thereby improving the joining strength.

In FIG. 8, third material 3 functions to position second material 2. To be more specific, second material 2 is brought into contact with the stepped portion of third material 3 and is sandwiched between first material 1 and third material 3 so as to easily position second material 2.

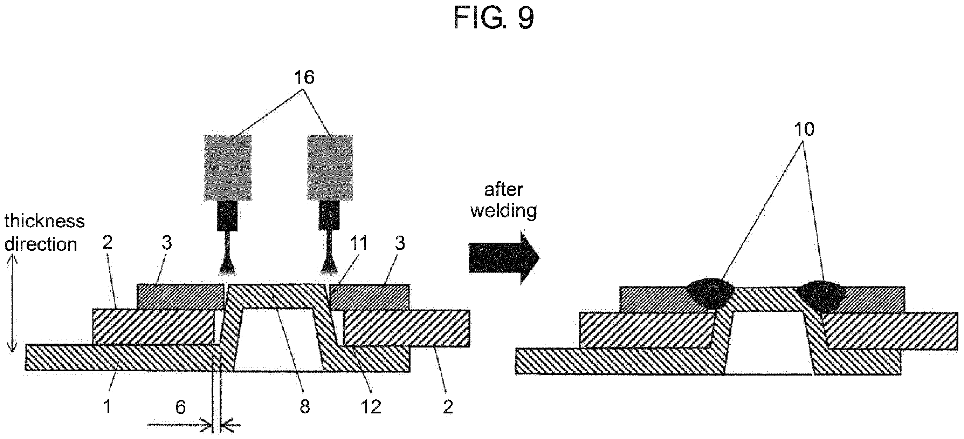

The welding described in the present exemplary embodiment is laser welding with laser 4; however, it is alternatively possible to employ arc welding with arc-welding torches 16 shown in FIG. 9 or plasma welding (not shown).

### SECOND EXEMPLARY EMBODIMENT

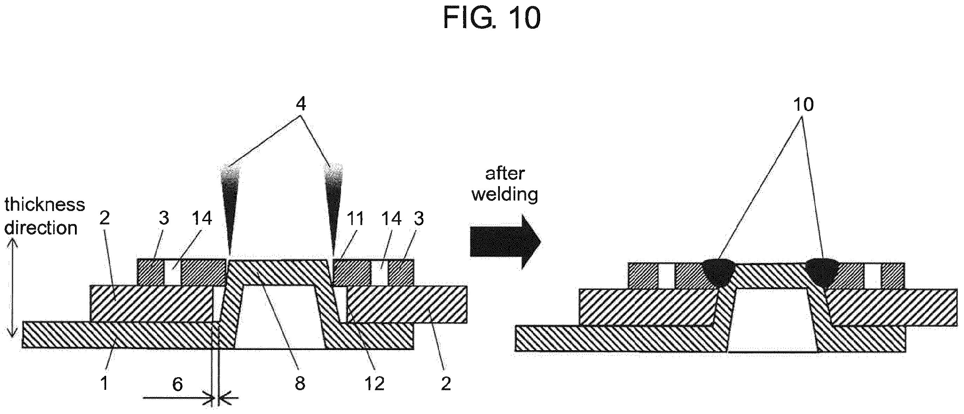

A second exemplary embodiment which forms part of the claimed invention will now be described with reference to FIG. 10. The same configuration as in the first exemplary embodiment will not be described again. The second exemplary embodiment differs from the first exemplary embodiment in having a plurality of discharge holes 14 or discharge grooves that penetrate either first material 1 or third material 3 in the thickness direction. Discharge holes 14 or discharge grooves are provided outside the region where first projection 8 and the rim of first through-hole 11 are in contact with each other in the direction perpendicular to the thickness direction. In other words, discharge holes 14 or discharge grooves are provided outside second through-hole 12 of second material 2 in the direction perpendicular to the thickness direction. Discharge holes 14 and discharge grooves are examples of the discharge opening of the present disclosure.

Assume that second material 2 is resin low in the melting and boiling points. In this case, second material 2 is likely to be melted by a welding heat input and to flow into weld 10 and vaporize, possibly generating welding holes or other defectiveness. To avoid this happening, discharge holes 14 can be formed in at least one of first and third materials 1 and 3 which sandwich and fix second material 2 in between. In this case, discharge holes 14 can prevent the molten part of second material 2 from flowing into weld 10 while laser 4 is being applied to it, and accelerates the discharge of the molten part to the outside.

Discharge holes 14 are provided in third material 3 in the present exemplary embodiment, but may alternatively be provided in first material 1 or in both first and third materials 1 and 3. Still alternatively, the discharge holes may be replaced by, for example, long discharge grooves.

### THIRD EXEMPLARY EMBODIMENT

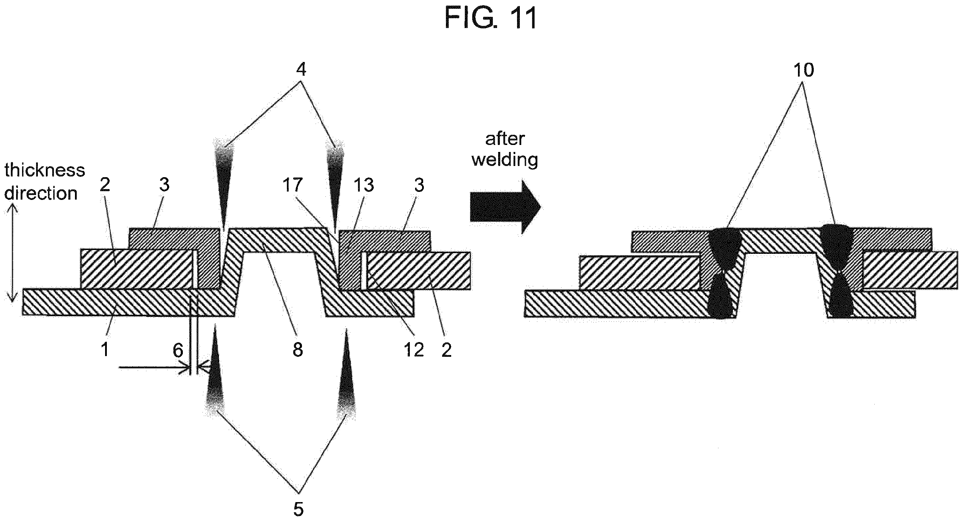

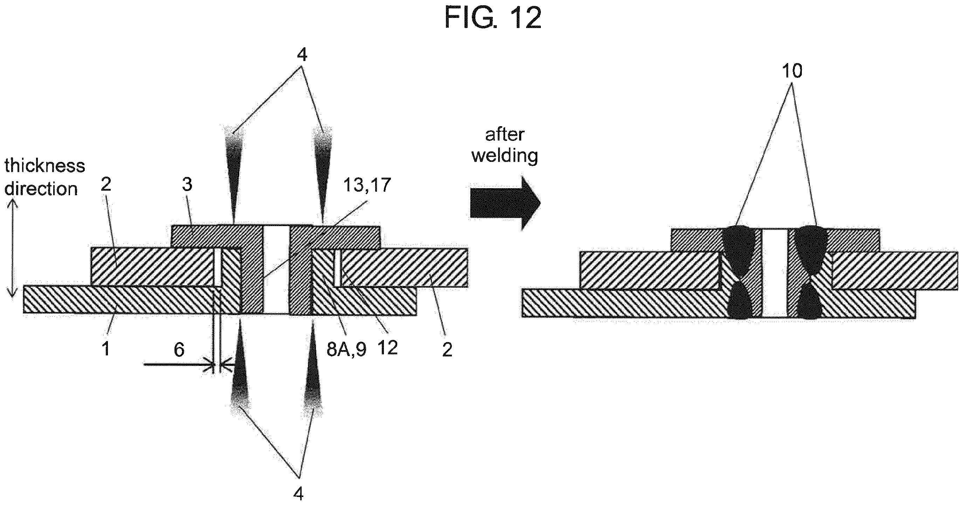

A third exemplary embodiment not forming part of the claimed invention will now be described with reference to FIGS. 11 and 12. The same configuration as in the first and second exemplary embodiments will not be described again. The third exemplary embodiment differs from the first exemplary embodiment in that third material 3 as the upper plate has second projection 13 having fourth through-hole 17 as an example of the fourth penetration portion.

The joint structure according to the present exemplary embodiment shown in FIG. 11 includes first material 1, which is metallic and has first projection 8, and third material 3, which is similar in type and weldable to first material 1 and has second projection 13. Second projection 13 has, at its end, fourth through-hole 17 larger in diameter or width than first projection 8 so that first projection 8 can be positioned in fourth through-hole 17. The joint structure further includes second material 2 difficult to be welded to first material 1 and third material 3. Second material 2 has second through-hole 12 whose rim is spaced radially or widthwise from second projection 13 by first gap 6. First gap 6 is larger in diameter or width than second projection 13. The outer edge of second projection 13 is positioned in second through-hole 12, and the outer edge of first projection 8 is positioned in the inner edge of fourth through-hole 17 so that second material 2 is sandwiched between first material 1 and third material 3. The region where first projection 8 and second projection 13 are in contact with each other is welded in the thickness direction so that first material 1 and third material 3 are melted and joined together with the different type of material compressed and fixed in between. This results in fixing first and third materials 1 and 3 of the similar types, and second material 2 of the different type all together.

The joint structure according to the present exemplary embodiment shown in FIG. 12 includes first material 1 having first projection 8A, which has third through-hole 9 at its end, and third material 3 having second projection 13. First material 1 and third material 3 are similar metallic materials and weldable to each other. The joint structure further includes second material 2 having second through-hole 12 large in diameter or width than the outer edge of first projection 8A, the rim of second through-hole 12 being spaced from first projection 8A by first gap 6. Second material 2 is different in type from and difficult to be welded to first and third materials 1 and 3.

The outer edge of first projection 8A is positioned in second penetrating part 12, and the outer edge of second projection 13 is positioned in the third through-hole 9. The outer edge of second projection 13 smaller than third through-hole 9 is positioned in third through-hole 9 of first projection 8A so that second material 2 of the different type is sandwiched between first material 1 and third material 3 of the similar types. The region where first projection 8A and second projection 13 are in contact with each other is welded in the thickness direction so that first material 1 and third material 3 are melted and joined together with the different type of material compressed and fixed in between. This results in fixing first and third materials 1 and 3 of the similar types, and second material 2 of the different type all together.

It is possible to melt and join the region where the outer edge of first projection 8 is in contact with the inner edge of second projection 13 from above and/or below in the thickness direction. Alternatively, it is possible to melt and join the region where the inner edge of first projection 8 is in contact with the outer edge of second projection 13 from above and/or below in the thickness direction. In this case, keyhole welding is desirable to apply laser 4. Thus, the joint structure is composed of similar types of first material 1 and third material 3 and a different type of second material 2 tightly sandwiched between these materials 1 and 3. This configuration reduces the influence of the welding heat input to second material 2, thereby achieving stable welding.

Third material 3 as the upper plate and first material 1 as the lower plate can be welded from both sides, or in other words, from above and below in the thickness direction. This further improves the joint strength.

When the strength does not matter, welding can be performed either from above or from below in the thickness direction.

It is possible to replace third material 3 as the upper plate with first material 1 as the lower plate, to sandwich second material 2 in between, and to apply laser 4 from at least one side in the thickness direction to the region where materials 1 and 3 are in contact with each other. Thus, the similar types of metallic materials and the different type of material can be fixedly joined to each other.

### CONCLUSION

Conventional rivets for joining different types of materials together have complicated shapes such as an R-chamfered part or an annular groove for the following objectives; to create a space to accommodate the part of the different type of material that is deformed during crimping and spot welding; and to prevent misalignment of the electrode during spot welding, and hence, to prevent depression of the different type of material so as to maintain the joint strength.

These objectives can be achieved by using rivets with a complicated shape. Such rivets can be fabricated by high precision processing technology, thus increasing the production cost. Furthermore, spot welding has low throughput because it involves time-consuming processes, such as pressurization, energization, cooling, and transfer. Moreover, the joint members are sandwiched from both sides, which indicates a low degree of design freedom. Adjacent rivets too close to each other can cause current diversion during spot welding. This would result in insufficient formation of a nugget, which is a part welded and solidified in the resistance welding. A desired nugget without current diversion can be formed by setting the pitch between adjacent rivets at not less than the minimum pitch. Therefore, rivets cannot be arranged at a pitch not more than the minimum pitch, making it impossible to improve joint stiffness at required positions. The present disclosure can solve these conventional problems.

As described above, the joint structure of an exemplary embodiment includes a first metallic material having first projection 8; a second metallic material similar in type to the first metallic material and weldable to the first metallic material, the second metallic material having first through-hole 11 larger in diameter or width than first projection 8, first projection 8 being positioned in first through-hole 11; and a different type of material different in type from the first metallic material and the second metallic material and difficult to be welded to the first metallic material and the second metallic material, the different type of material having second through-hole 12 larger in diameter or width than first projection 8, the rim of second through-hole 12 being spaced radially or widthwise from first projection 8 by first gap 6. First projection 8 is positioned in second through-hole 12 with first gap 6 in between, the size of first gap 6 being varied depending on the type of the different type of material. First projection 8 is further positioned in first through-hole 11. Hence, the different type of material is sandwiched between the first metallic material and the second metallic material. The outer edge of first projection 8 is welded to the inner edge of first through-hole 11 so that the first metallic material and the second metallic material are melted and joined together to compress and fix the different type of material between the first metallic material and the second metallic material, thereby fixing the first metallic material, the second metallic material, and the different type of material together.

This joint structure eliminates the need to use complicated parts that are fabricated by high precision processing technology. As another advantage, the use of laser welding instead of spot welding reduces the operating time including welding time to about 25% of spot welding, thereby greatly improving the throughput. Another advantage is to increase the stiffness at required positions and the degree of design freedom of joint members.

In the above joint structure, when the different type of material is sandwiched between the first metallic material and the second metallic material, the first metallic material and the second metallic material may be melted and joined together with the end of first projection 8 extending further than first through-hole 11.

In the above joint structure, the end of first projection 8A may have third through-hole 9.

The joint structure of another exemplary embodiment may include a first metallic material having first projection 8; a second metallic material similar in type to the first metallic material and weldable to the first metallic material, the second metallic material having second projection 13 having, at an end, fourth through-hole 17 larger in diameter or width than first projection 8, the first projection 8 being positioned in fourth through-hole 17; and a different type of material different in type from the first metallic material and the second metallic material and difficult to be welded to the first metallic material and the second metallic material, the different type of material having second through-hole 12 larger in diameter or width than second projection 13, the rim of second through-hole 12 being spaced radially or widthwise from second projection 13 by first gap 6. The outer edge of second projection 13 is positioned in second through-hole 12, and the outer edge of first projection 8 is positioned in the inner edge of fourth through-hole 17 so that the different type of material is sandwiched between the first metallic material and the second metallic material. The region where first projection 8 and second projection 13 are in contact with each other is welded in the thickness direction so that the first metallic material and the second metallic material are melted and joined together to compress and fix the different type of material between the first metallic material and the second metallic material, thereby fixing the first metallic material, the second metallic material, and the different type of material all together.

The joint structure of another exemplary embodiment may include a first metallic material having first projection 8A having at an end, third through-hole 9; a second metallic material similar in type to the first metallic material and weldable to the first metallic material, the second metallic material having second projection 13; and a different type of material different in type from the first metallic material and the second metallic material and difficult to be welded to the first metallic material and the second metallic material, the different type of material having second through-hole 12 larger in diameter or width than the outer edge of first projection 8A, the rim of second through-hole 12 being spaced from first projection 8A by first gap 6. The outer edge of first projection 8A is positioned in second penetrating part 12, and the outer edge of second projection 13 is positioned in the third though-hole 9. The outer edge of second projection 13 smaller than third through-hole 9 is positioned in third through-hole 9 of first projection 8A so that the different type of material is sandwiched between the first metallic material and the second metallic material. The region where first projection 8A and second projection 13 are in contact with each other is welded in the thickness direction so that the first metallic material and the second metallic material are melted and joined together to compress and fix the different type of material between the first metallic material and the second metallic material, thereby fixing the first metallic material, the second metallic material, and the different type of material together.

Part of the different type of material that is around second through-hole 12 may flow and be tightly fixed to the outer periphery of either first projection 8 or second projection 13.

At least one of the first metallic material and the second metallic material sandwiching the different type of material in between may have discharge holes 14 penetrating in the thickness direction, discharge holes 14 being located in a position corresponding to the outside of second through-hole 12 of the different type of material.

The welding to join the first metallic material and the second metallic material together may be one of laser welding, arc welding, and plasma welding.

### INDUSTRIAL APPLICABILITY

The joint structure of the present disclosure is simple and can greatly reduce the production cycle time and increase stiffness at required positions when different types of materials are joined together. This joint structure, which can increase the degree of design freedom of joint members, is industrially applicable.

### REFERENCE MARKS IN THE DRAWINGS

- 1: first material (first metallic material)
- 2: second material (different type of material)
- 3: third material (second metallic material)
- 4: laser
- 6: first gap
- 7: second gap
- 8, 8A: first projection
- 9: third through-hole (third penetrating part)
- 10, 10A: weld
- 11: first through-hole (first penetrating part)
- 12: second through-hole (second penetrating part)
- 13: second projection
- 14: discharge hole (discharge opening)
- 15: projection length
- 16: arc-welding torch
- 17: fourth through-hole(fourth penetration part)

## Claims

1. A joint structure comprising:
a first metallic material (1) having a first projection (8);
a second metallic material (3) similar in type to the first metallic material (1) and weldable to the first metallic material (1), the second metallic material (3) having a first penetrating part (11) larger in diameter or width than the first projection (8), the first projection (8) being positioned in the first penetrating part (11); and
a different type of material (2) different in type from the first metallic material (1) and the second metallic material (3) and difficult to be welded to the first metallic material (1) and the second metallic material (3), the different type of material (2) having a second penetrating part (12) larger in diameter or width than the first projection (8), a rim of the second penetrating part (12) being spaced radially or widthwise from the first projection (8) by a first gap (6),
wherein
the first projection (8) is positioned in the second penetrating part (12) with the first gap (6) between the first projection (8) and the second penetrating part (12), and the first projection (8) is further positioned in the first penetrating part (11) so that the different type of material (2) is sandwiched between the first metallic material (1) and the second metallic material (3), and
an outer edge of the first projection (8) of the first metallic material (1) is welded to an inner edge of the first penetrating part (11) so that the first metallic material (1) and the second metallic material (3) are melted and joined together to compress and fix the different type of material (2) between the first metallic material (1) and the second metallic material (3), thereby fixing the first metallic material (1), the second metallic material (3), and the different type of material (2) together,
**characterized in that**
at least one of the first metallic material (1) and the second metallic material (3) sandwiching the different type of material (2) between the first metallic material (1) and the second metallic material (3) has a discharge opening (14) penetrating along a thickness of the one of the first metallic material (1) and the second metallic material (3), the discharge opening (14) being located in a position corresponding to an outside of the second penetrating part (12) of the different type of material (2).

2. The joint structure according to claim 1, wherein when the different type of material (2) is sandwiched between the first metallic material (1) and the second metallic material (3), the first metallic material (1) and the second metallic material (3) are melted and joined together with an end of the first projection (8) extending further than the first penetrating part (11).

3. The joint structure according to claim 1 or 2, wherein an end of the first projection (8) has a third penetrating part (9).

4. A joint structure comprising:
a first metallic material (1) having a first projection (8A);
a second metallic material (3) similar in type to the first metallic material (1) and weldable to the first metallic material (1), the second metallic material (3) having a second projection (13), the second projection (13) having, at an end, a fourth penetration portion (17) larger in diameter or width than the first projection (8A), the first projection (8A) being positioned in the fourth penetration portion (17); and
a different type of material (2) different in type from the first metallic material (1) and the second metallic material (3) and difficult to be welded to the first metallic material (1) and the second metallic material (3), the different type of material (2) having a second penetrating part (12) larger in diameter or width than the second projection (13), a rim of the second penetrating part (12) being spaced radially or widthwise from the second projection (13) by a first gap (6),
wherein
an outer edge of the second projection (13) is positioned in the second penetrating part (12), and an outer edge of the first projection (8A) is positioned in an inner edge of the fourth penetration portion (17) so that the different type of material (2) is sandwiched between the first metallic material (1) and the second metallic material (3),
a region where the first projection (8A) and the second projection (13) are in contact with each other is welded in a thickness direction so that the first metallic material (1) and the second metallic material (3) are melted and joined together to compress and fix the different type of material (2) between the first metallic material (1) and the second metallic material (3), thereby fixing the first metallic material (1), the second metallic material (3), and the different type of material (2) all together, and
at least one of the first metallic material (1) and the second metallic material (3) sandwiching the different type of material (2) between the first metallic material (1) and the second metallic material (3) has a discharge opening (14) penetrating along a thickness of the one of the first metallic material (1) and the second metallic material (3), the discharge opening (14) being located in a position corresponding to an outside of the second penetrating part (12) of the different type of material (2).

5. A joint structure comprising:
a first metallic material (1) having a first projection (8A), the first projection (8A) having, at an end, a third penetrating part (9);
a second metallic material (3) similar in type to the first metallic material (1) and weldable to the first metallic material (1), the second metallic material (3) having a second projection (13); and
a different type of material (2) different in type from the first metallic material (1) and the second metallic material (3) and difficult to be welded to the first metallic material (1) and the second metallic material (3), the different type of material (2) having a second penetrating part (12) larger in diameter or width than an outer edge of the first projection (8A), a rim of the second penetrating part (12) being spaced from the first projection (8A) by a first gap (6),
wherein
the outer edge of the first projection (8A) is positioned in the second penetrating part (12); an outer edge of the second projection (13) is positioned in the third penetrating part (9); and the outer edge of the second projection (13) smaller than the third penetrating part (9) is positioned in the third penetrating part (9) of the first projection (8A) so that the different type of material (2) is sandwiched between the first metallic material (1) and the second metallic material (3),
a region where the first projection (8A) and the second projection (13) are in contact with each other is welded in a thickness direction so that the first metallic material (1) and the second metallic material (3) are melted and joined together to compress and fix the different type of material (2) between the first metallic material (1) and the second metallic material (3), thereby fixing the first metallic material (1), the second metallic material (3), and the different type of material (2) all together, and
at least one of the first metallic material (1) and the second metallic material (3) sandwiching the different type of material (2) between the first metallic material (1) and the second metallic material (3) has a discharge opening (14) penetrating along a thickness of the one of the first metallic material (1) and the second metallic material (3), the discharge opening (14) being located in a position corresponding to an outside of the second penetrating part (12) of the different type of material (2).

6. The joint structure according to claim 1 or 5, wherein part of the different type of material (2) that is around the second penetrating part (12) flows and is tightly fixed to an outer periphery of the first projection (8, 8A).

7. The joint structure according to claim 4, wherein part of the different type of material (2) that is around the second penetrating part (12) flows and is tightly fixed to an outer periphery of the second projection (13).

8. The joint structure according to any of claims 1 to 7, wherein the welding to join the first metallic material (1) and the second metallic material (3) together is one of laser welding, arc welding, and plasma welding.

9. The joint structure according to any of claims 1 to 8, wherein the at least one of the first metallic material (1) and the second metallic material (3) having the discharge opening (14) has at least another discharge opening (14) penetrating along a thickness of the one of the first metallic material (1) and the second metallic material (3), the discharge opening (14) being located in a position corresponding to an outside of the second penetrating part (12) of the different type of material (2), the at least another discharge opening (14) being located in another position corresponding to an outside of the second penetrating part (12) of the different type of material (2) such that the second penetrating part (12) is between the discharge opening (14) and the at least another discharge opening (14).

## Patentansprüche

1. Verbindungsstruktur, die Folgendes umfasst:
ein erstes Metallmaterial (1) mit einem ersten Vorsprung (8) ;
ein zweites Metallmaterial (3), das vom Typ her dem ersten Metallmaterial (1) ähnlich und an das erste Metallmaterial (1) schweißbar ist, wobei das zweite Metallmaterial (3) ein erstes durchdringendes Teil (11) aufweist, dessen Durchmesser oder Breite größer ist als der erste Vorsprung (8), wobei der erste Vorsprung (8) im ersten durchdringenden Teil (11) positioniert ist; und
einen anderen Typ Material (2), der sich vom Typ her vom ersten Metallmaterial (1) und vom zweiten Metallmaterial (3) unterscheidet und schwer an das erste Metallmaterial (1) und das zweite Metallmaterial (3) zu schweißen ist, wobei der andere Typ Material (2) ein zweites durchdringendes Teil (12) aufweist, dessen Durchmesser oder Breite größer ist als der erste Vorsprung (8), wobei ein Rand des zweiten durchdringenden Teils (12) um einen ersten Spalt (6) radial oder in der Breite vom ersten Vorsprung (8) beabstandet ist,
wobei
der erste Vorsprung (8) im zweiten durchdringenden Teil (12) positioniert ist, wobei sich der erste Spalt (6) zwischen dem ersten Vorsprung (8) und dem zweiten durchdringenden Teil (12) befindet und der erste Vorsprung (8) weiter im ersten durchdringenden Teil (11) positioniert ist, derart, dass der andere Typ Material (2) zwischen dem ersten Metallmaterial (1) und dem zweiten Metallmaterial (3) eingeschlossen ist, und
eine Außenkante des ersten Vorsprungs (8) des ersten Metallmaterials (1) an eine Innenkante des ersten durchdringenden Teils (11) geschweißt ist, derart, dass das erste Metallmaterial (1) und das zweite Metallmaterial (3) geschmolzen und verbunden sind, um den anderen Typ Material (2) zwischen dem ersten Metallmaterial (1) und dem zweiten Metallmaterial (3) zusammenzudrücken und zu fixieren, wodurch das erste Metallmaterial (1), das zweite Metallmaterial (3) und der andere Typ Material (2) zusammen fixiert werden,
**dadurch gekennzeichnet, dass**
mindestens eines des ersten Metallmaterials (1) und des zweiten Metallmaterials (3), die den anderen Typ Material (2) zwischen dem ersten Metallmaterial (1) und dem zweiten Metallmaterial (3) einschließen, eine Ausgabeöffnung (14) aufweist, die entlang einer Dicke des einen des ersten Metallmaterials (1) und des zweiten Metallmaterials (3) durchdringend ist, wobei sich die Ausgabeöffnung (14) in einer Position befindet, die einer Außenseite des zweiten durchdringenden Teils (12) des anderen Typs Material (2) entspricht.

2. Verbindungsstruktur nach Anspruch 1, wobei, wenn der andere Typ Material (2) zwischen dem ersten Metallmaterial (1) und dem zweiten Metallmaterial (3) eingeschlossen ist, das erste Metallmaterial (1) und das zweite Metallmaterial (3) geschmolzen und mit einem Ende des ersten Vorsprungs (8), der sich weiter erstreckt als das erste durchdringende Teil (11), verbunden sind.

3. Verbindungsstruktur nach Anspruch 1 oder 2, wobei ein Ende des ersten Vorsprungs (8) ein drittes durchdringendes Teil (9) aufweist.

4. Verbindungsstruktur, die Folgendes umfasst:
ein erstes Metallmaterial (1) mit einem ersten Vorsprung (8A) ;
ein zweites Metallmaterial (3), das vom Typ her dem ersten Metallmaterial (1) ähnlich und an das erste Metallmaterial (1) schweißbar ist, wobei das zweite Metallmaterial (3) einen zweiten Vorsprung (13) aufweist, wobei der zweite Vorsprung (13) an einem Ende einen vierten durchdringenden Abschnitt (17) aufweist, dessen Durchmesser oder Breite größer ist als der erste Vorsprung (8A), wobei der erste Vorsprung (8A) im vierten durchdringenden Abschnitt (17) positioniert ist; und
einen anderen Typ Material (2), der sich vom Typ her vom ersten Metallmaterial (1) und vom zweiten Metallmaterial (3) unterscheidet und schwer an das erste Metallmaterial (1) und das zweite Metallmaterial (3) zu schweißen ist, wobei der andere Typ Material (2) ein zweites durchdringendes Teil (12) aufweist, dessen Durchmesser oder Breite größer ist als der zweite Vorsprung (13), wobei ein Rand des zweiten durchdringenden Teils (12) um einen ersten Spalt (6) radial oder in der Breite vom zweiten Vorsprung (13) beabstandet ist,
wobei
eine Außenkante des zweiten Vorsprungs (13) im zweiten durchdringenden Teil (12) positioniert ist und eine Außenkante des ersten Vorsprungs (8A) in einer Innenkante des vierten durchdringenden Abschnitts (17) positioniert ist, derart, dass der andere Typ Material (2) zwischen dem ersten Metallmaterial (1) und dem zweiten Metallmaterial (3) eingeschlossen ist,
ein Bereich, in dem der erste Vorsprung (8A) und der zweite Vorsprung (13) miteinander in Kontakt sind, in einer Dickenrichtung geschweißt ist, derart, dass das erste Metallmaterial (1) und das zweite Metallmaterial (3) geschmolzen und verbunden sind, um den anderen Typ Material (2) zwischen dem ersten Metallmaterial (1) und dem zweiten Metallmaterial (3) zusammenzudrücken und zu fixieren, wodurch das erste Metallmaterial (1), das zweite Metallmaterial (3) und der andere Typ Material (2) alle zusammen fixiert werden, und
mindestens eines des ersten Metallmaterials (1) und des zweiten Metallmaterials (3), die den anderen Typ Material (2) zwischen dem ersten Metallmaterial (1) und dem zweiten Metallmaterial (3) einschließen, eine Ausgabeöffnung (14) aufweist, die entlang einer Dicke des einen des ersten Metallmaterials (1) und des zweiten Metallmaterials (3) durchdringend ist, wobei sich die Ausgabeöffnung (14) in einer Position befindet, die einer Außenseite des zweiten durchdringenden Teils (12) des anderen Typs Material (2) entspricht.

5. Verbindungsstruktur, die Folgendes umfasst:
ein erstes Metallmaterial (1) mit einem ersten Vorsprung (8A), wobei der erste Vorsprung (8A) an einem Ende ein drittes durchdringendes Teil (9) aufweist;
ein zweites Metallmaterial (3), das vom Typ her dem ersten Metallmaterial (1) ähnlich und an das erste Metallmaterial (1) schweißbar ist, wobei das zweite Metallmaterial (3) einen zweiten Vorsprung (13) aufweist; und
einen anderen Typ Material (2), der sich vom Typ her vom ersten Metallmaterial (1) und vom zweiten Metallmaterial (3) unterscheidet und schwer an das erste Metallmaterial (1) und das zweite Metallmaterial (3) zu schweißen ist, wobei der andere Typ Material (2) ein zweites durchdringendes Teil (12) aufweist, dessen Durchmesser oder Breite größer ist als eine Außenkante des ersten Vorsprungs (8A), wobei ein Rand des zweiten durchdringenden Teils (12) um einen ersten Spalt (6) vom ersten Vorsprung (8A) beabstandet ist,
wobei
die Außenkante des ersten Vorsprungs (8A) im zweiten durchdringenden Teil (12) positioniert ist; eine Außenkante des zweiten Vorsprungs (13) im dritten durchdringenden Teil (9) positioniert ist und die Außenkante des zweiten Vorsprungs (13), der kleiner ist als das dritte durchdringende Teil (9), im dritten durchdringenden Teil (9) des ersten Vorsprungs (8A) positioniert ist, derart, dass der andere Typ Material (2) zwischen dem ersten Metallmaterial (1) und dem zweiten Metallmaterial (3) eingeschlossen ist,
ein Bereich, in dem der erste Vorsprung (8A) und der zweite Vorsprung (13) miteinander in Kontakt sind, in einer Dickenrichtung geschweißt ist, derart, dass das erste Metallmaterial (1) und das zweite Metallmaterial (3) geschmolzen und verbunden sind, um den anderen Typ Material (2) zwischen dem ersten Metallmaterial (1) und dem zweiten Metallmaterial (3) zusammenzudrücken und zu fixieren, wodurch das erste Metallmaterial (1), das zweite Metallmaterial (3) und der andere Typ Material (2) alle zusammen fixiert werden, und
mindestens eines des ersten Metallmaterials (1) und des zweiten Metallmaterials (3), die den anderen Typ Material (2) zwischen dem ersten Metallmaterial (1) und dem zweiten Metallmaterial (3) einschließen, eine Ausgabeöffnung (14) aufweist, die entlang einer Dicke des einen des ersten Metallmaterials (1) und des zweiten Metallmaterials (3) durchdringend ist, wobei sich die Ausgabeöffnung (14) in einer Position befindet, die einer Außenseite des zweiten durchdringenden Teils (12) des anderen Typs Material (2) entspricht.

6. Verbindungsstruktur nach Anspruch 1 oder 5, wobei ein Teil des anderen Typs Material (2), der das zweite durchdringende Teil (12) umgibt, fließt und eng an einem Außenumfang des ersten Vorsprungs (8, 8A) fixiert ist.

7. Verbindungsstruktur nach Anspruch 4, wobei ein Teil des anderen Typs Material (2), der das zweite durchdringende Teil (12) umgibt, fließt und eng an einem Außenumfang des zweiten Vorsprungs (13) fixiert ist.

8. Verbindungsstruktur nach einem der Ansprüche 1 bis 7, wobei das Schweißen zum Verbinden des ersten Metallmaterials (1) und des zweiten Metallmaterials (3) eines von Laserschweißen, Lichtbogenschweißen und Plasmaschweißen ist.

9. Verbindungsstruktur nach einem der Ansprüche 1 bis 8, wobei das mindestens eine des ersten Metallmaterials (1) und des zweiten Metallmaterials (3), das die Ausgabeöffnung (14) aufweist, mindestens eine andere Ausgabeöffnung (14) aufweist, die entlang einer Dicke des einen des ersten Metallmaterials (1) und des zweiten Metallmaterials (3) durchdringend ist, wobei sich die Ausgabeöffnung (14) in einer Position befindet, die einer Außenseite des zweiten durchdringenden Teils (12) des anderen Typs Material (2) entspricht, wobei sich die mindestens eine andere Ausgabeöffnung (14) in einer anderen Position befindet, die einer Außenseite des zweiten durchdringenden Teils (12) des anderen Typs Material (2) entspricht, derart, dass sich das zweite durchdringende Teil (12) zwischen der Ausgabeöffnung (14) und der mindestens einen anderen Ausgabeöffnung (14) befindet.

## Revendications

1. Structure de joint comprenant :
un premier matériau métallique (1) ayant une première saillie (8) ;
un second matériau métallique (3) similaire, du point de vue du type, au premier matériau métallique (1) et pouvant être soudé sur le premier matériau métallique (1), le second matériau métallique (3) ayant une première partie de pénétration (11) supérieure, du point de vue du diamètre ou de la largeur, à la première saillie (8), la première saillie (8) étant positionnée dans la première partie de pénétration (11) ; et
un type différent de matériau (2) différent, du point de vue du type, du premier matériau métallique (1) et du second matériau métallique (3) et difficile à souder sur le premier matériau métallique (1) et le second matériau métallique (3), le type différent de matériau (2) ayant une deuxième partie de pénétration (12) supérieure, du point de vue du diamètre ou de la largeur, à la première saillie (8), un rebord de la deuxième partie de pénétration (12) étant espacé radialement ou dans le sens de la largeur de la première saillie (8) par un premier espace (6),
dans laquelle :
la première saillie (8) est positionnée dans la deuxième partie de pénétration (12) avec le premier espace (6) entre la première saillie (8) et la deuxième partie de pénétration (12), et la première saillie (8) est en outre positionnée dans la première partie de pénétration (11) de sorte que le type différent de matériau (2) est pris en sandwich entre le premier matériau métallique (1) et le second matériau métallique (3), et
un bord externe de la première saillie (8) du premier matériau métallique (1) est soudé sur un bord interne de la première partie de pénétration (11) de sorte que le premier matériau métallique (1) et le second matériau métallique (3) sont fondus et assemblés pour comprimer et fixer le type différent de matériau (2) entre le premier matériau métallique (1) et le second matériau métallique (3), fixant ainsi le premier matériau métallique (1), le second matériau métallique (3) et le type différent de matériau (2) ensemble,
**caractérisée en ce que** :
au moins l'un parmi le premier matériau métallique (1) et le second matériau métallique (3) prenant en sandwich le type différent de matériau (2) entre le premier matériau métallique (1) et le second matériau métallique (3) a une ouverture de décharge (14) pénétrant le long d'une épaisseur de l'un parmi le premier matériau métallique (1) et le second matériau métallique (3), l'ouverture de décharge (14) étant positionnée dans une position correspondant à un extérieur de la deuxième partie de pénétration (12) du type différent de matériau (2).

2. Structure de joint selon la revendication 1, dans laquelle lorsque le type différent de matériau (2) est pris en sandwich entre le premier matériau métallique (1) et le second matériau métallique (3), le premier matériau métallique (1) et le second matériau métallique (3) sont fondus et assemblés avec une extrémité de la première saillie (8) qui s'étend plus loin que la première partie de pénétration (11).

3. Structure de joint selon la revendication 1 ou 2, dans laquelle une extrémité de la première saillie (8) a une troisième partie de pénétration (9).

4. Structure de joint comprenant :
un premier matériau métallique (1) ayant une première saillie (8A) ;
un second matériau métallique (3) similaire, du point de vue du type, au premier matériau métallique (1) et pouvant être soudé sur le premier matériau métallique (1), le second matériau métallique (3) ayant une seconde saillie (13), la seconde saillie (13) ayant, à une extrémité, une quatrième partie de pénétration (17) supérieure, du point de vue du diamètre ou de la largeur, à la première saillie (8A), la première saillie (8A) étant positionnée dans la quatrième partie de pénétration (17) ; et
un type différent de matériau (2) différent, du point de vue du type, du premier matériau métallique (1) et du second matériau métallique (3) et difficile à souder sur le premier matériau métallique (1) et le second matériau métallique (3), le type différent de matériau (2) ayant une deuxième partie de pénétration (12) supérieure, du point de vue du diamètre ou de la largeur, à la seconde saillie (13), un rebord de la deuxième partie de pénétration (12) étant espacé radialement ou dans le sens de la largeur de la seconde saillie (13) par un premier espace (6),
dans laquelle :
un bord externe de la seconde saillie (13) est positionné dans la deuxième partie de pénétration (12) et un bord externe de la première saillie (8A) est positionné dans un bord interne de la quatrième partie de pénétration (17), de sorte que le type différent de matériau (2) est pris en sandwich entre le premier matériau métallique (1) et le second matériau métallique (3),
une région dans laquelle la première saillie (8A) et la seconde saillie (13) sont en contact entre elles, est soudée, dans une direction d'épaisseur, de sorte que le premier matériau métallique (1) et le second matériau métallique (3) sont fondus et assemblés pour comprimer et fixer le type différent de matériau (2) entre le premier matériau métallique (1) et le second matériau métallique (3), fixant ainsi le premier matériau métallique (1), le second matériau métallique (3) et le type différent de matériau (2) ensemble, et
au moins l'un parmi le premier matériau métallique (1) et le second matériau métallique (3) prenant en sandwich le type différent de matériau (2) entre le premier matériau métallique (1) et le second matériau métallique (3) a une ouverture de décharge (14) pénétrant le long d'une épaisseur de l'un parmi le premier matériau métallique (1) et le second matériau métallique (3), l'ouverture de décharge (14) étant positionnée dans une position correspondant à un extérieur de la deuxième partie de pénétration (12) du type différent de matériau (2).

5. Structure de joint comprenant :
un premier matériau métallique (1) ayant une première saillie (8A), la première saillie (8A) ayant, à une extrémité, une troisième partie de pénétration (9) ;
un second matériau métallique (3) similaire, du point de vue du type, au premier matériau métallique (1) et pouvant être soudé sur le premier matériau métallique (1), le second matériau métallique (3) ayant une seconde saillie (13) ; et
un type différent de matériau (2) différent du point de vue du type, du premier matériau métallique (1) et du second matériau métallique (3) et difficile à souder sur le premier matériau métallique (1) et le second matériau métallique (3), le type différent de matériau (2) ayant une deuxième partie de pénétration (12) supérieure, du point de vue du diamètre ou de la largeur, à un bord externe de la première saillie (8A), un rebord de la deuxième partie de pénétration (12) étant espacé de la première saillie (8A) par un premier espace (6),
dans laquelle :
le bord externe de la première saillie (8A) est positionné dans la deuxième partie de pénétration (12) ; un bord externe de la seconde saillie (13) est positionné dans la troisième partie de pénétration (9) ; et le bord externe de la seconde saillie (13) inférieur à la troisième partie de pénétration (9) est positionné dans la troisième partie de pénétration (9) de la première saillie (8A) de sorte que le type différent de matériau (2) est pris en sandwich entre le premier matériau métallique (1) et le second matériau métallique (3),
une région dans laquelle la première saillie (8A) et la seconde saillie (13) sont en contact entre elles, est soudée dans une direction d'épaisseur, de sorte que le premier matériau métallique (1) et le second matériau métallique (3) sont fondus et assemblés pour comprimer et fixer le type différent de matériau (2) entre le premier matériau métallique (1) et le second matériau métallique (3), fixant ainsi le premier matériau métallique (1), le second matériau métallique (3) et le type différent de matériau (2) ensemble, et
au moins l'un parmi le premier matériau métallique (1) et le second matériau métallique (3) prenant en sandwich le type différent de matériau (2) entre le premier matériau métallique (1) et le second matériau métallique (3) a une ouverture de décharge (14) pénétrant le long d'une épaisseur de l'un parmi le premier matériau métallique (1) et le second matériau métallique (3), l'ouverture de décharge (14) étant positionnée dans une position correspondant à un extérieur de la deuxième partie de pénétration (12) du type différent de matériau (2).

6. Structure de joint selon la revendication 1 ou 5, dans laquelle une partie du type différent de matériau (2) qui est autour de la deuxième partie de pénétration (12) s'écoule et est solidement fixée sur une périphérie externe de la première saillie (8, 8A).

7. Structure de joint selon la revendication 4, dans laquelle une partie du type différent de matériau (2) qui est autour de la deuxième partie de pénétration (12) s'écoule et est solidement fixée à une périphérie externe de la seconde saillie (13) .

8. Structure de joint selon l'une quelconque des revendications 1 à 7, dans laquelle le soudage pour assembler le premier matériau métallique (1) et le second matériau métallique (3) est l'un parmi le soudage au laser, le soudage à l'arc et le soudage au plasma.

9. Structure de joint selon l'une quelconque des revendications 1 à 8, dans laquelle le au moins un parmi le premier matériau métallique (1) et le second matériau métallique (3) ayant l'ouverture de décharge (14) a au moins une autre ouverture de décharge (14) pénétrant le long d'une épaisseur de l'un parmi le premier matériau métallique (1) et le second matériau métallique (3), l'ouverture de décharge (14) étant positionnée dans une position correspondant à un extérieur de la deuxième partie de pénétration (12) du type différent de matériau (2), la au moins une autre ouverture de décharge (14) étant positionnée dans une autre position correspondant à un extérieur de la deuxième partie de pénétration (12) du type différent de matériau (2), de sorte que la deuxième partie de pénétration (12) est entre l'ouverture de décharge (14) et la au moins une autre ouverture de décharge (14).
